**Europäisches Patentamt**

**European Patent Office**

**Office européen des brevets**

(11) Publication number: **0 057 596**
**B1**

(12) **EUROPEAN PATENT SPECIFICATION**

(45) Date of publication of patent specification: **27.11.85**

(51) Int. Cl.⁴: **G 01 N 25/02**

(21) Application number: **82300481.7**

(22) Date of filing: **29.01.82**

(54) **Apparatus for measuring melting point and boiling point of a sample.**

(30) Priority: **30.01.81 JP 12607/81**

(43) Date of publication of application:
**11.08.82 Bulletin 82/32**

(45) Publication of the grant of the patent:
**27.11.85 Bulletin 85/48**

(84) Designated Contracting States:
**DE FR GB NL**

(56) References cited:
**FR-A-1 457 898**
**FR-A-1 567 708**
**FR-A-2 289 905**
**GB-A-1 066 124**
**US-A-3 442 116**
**US-A-3 677 064**
**US-A-3 695 093**

(73) Proprietor: **HOXAN CORPORATION**
**2-Nishi, 1-chome Kita 3-jyo**
**Chuo-ku Sapporo-shi Hokkaido (JP)**

(72) Inventor: **Kuraoka, Yasuo c/o Hoxan Laboratory**
**Hoxan Corporation 29-Banchi, 2-chome Gojo**
**Kikusui Sapporo-shi Hokkaido (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to an apparatus for measuring the melting point and boiling point of a sample to obtain the purity and the mixture ratio of sample gases.

A variety of methods of measuring, for example, with a gas chromatograph or the like, the purity of a sample gas such as benzene or the mixture ratio of several gases in mixed gases have been proposed but the measuring operation is complicated and the apparatus is expensive which is a considerable disadvantage.

It has already been proposed to obtain the purity and the mixture ratio of sample gases by measuring the melting point and the boiling point of samples by utilizing the fact that the melting point and the boiling point of the samples vary according to the amount of impurities contained in the sample and that the melting point and the boiling point exhibit predetermined values in accordance with the mixture ratio of the mixed gases. G.B.—A—1,066,124 and FR—A—1,457,898 disclose apparatus for obtaining such results but they suffer from various disadvantages e.g. they unfortunately cannot obtain highly accurate measured results of the melting point and the boiling point, or they are only suitable for laboratory use as in the case of FR—A—1,457,898. Accordingly, where a measurement of the purity of the gas or gases is required, it has been necessary to employ a gas chromatograph or the like.

U.S.—A—3,677,064 discloses apparatus comprising a sample cell, heat isolating tank, temperature measuring system and piping system. The apparatus is used for detecting the crystal point of a normally liquid composition having constituents which crystallise upon cooling and there is no disclosure of obtaining a boiling point of the sample or of determining purity and mixture ratio of the constituents of the sample.

Accordingly, an object of this invention is to provide an apparatus for measuring the melting point and the boiling point of gas which can precisely perform the measurements of the melting point and the boiling point of the gas and inexpensively.

The present invention provides an apparatus for measuring the melting point and the boiling point of a sample comprising: a heat insulating tank, an inner tank provided within the heat insulating tank and having a port communicating between the inner tank and the heat insulating tank, a sample cell containing the sample initially in the gaseous state provided within said inner tank, a sample temperature measuring system, and a piping system having an inlet and an outlet said piping system providing a heating/cooling medium at said outlet and having parallel heating and cooling routes for said medium, the heating route including a heating flow rate control valve and a heating heat exchanger heated by a heating source and connected in series with said heating rate flow control valve and the cooling route including a cooling flow rate control valve and a cooling heat exchanger cooled by a cooling source and connected in series with said cooling flow rate control valve, wherein the outlet of said piping system opens within said inner tank, said heat insulating tank being provided with an output which connects the heating insulating tank with the inlet of the piping system through a feedback conduit so that the medium can circulate from the piping system through the inner tank, the port, the space included between the outer wall of said inner tank and the inner wall of the heat insulating tanks, and back to the piping system.

The apparatus has the advantage that the temperature of the sample gas can be controlled so that the gas is not affected thermally by the external temperature.

Preferably, the temperature of the sample gas can be raised or lowered as desired with fine adjustments in the temperature changes.

Advantageously, the temperature of the sample gas can be raised or lowered in accordance with the phase state of the sample gas and with the request of measuring the melting point or the boiling point with rapid and simple operations.

A further advantage of the apparatus is that the reliability of the measured results can be improved by further measuring the melting point and the boiling point of the same sample under the reversely lowering and raising temperature control after the measurements of the melting point and the boiling point of the sample.

Other features and advantages of the invention will become apparent from the following description of an embodiment thereof when taken in conjunction with the accompanying drawings, in which:

Figure 1 is an explanatory piping diagram partly cut out of one preferred embodiment of an apparatus for measuring the melting point and the boiling point of a sample constructed according to the present invention; and

Figure 2 is a graphical representation indicating the temperature T of the sample gas with respect to the time t of the case where the melting point and the boiling point of the sample are measured by the apparatus of this invention.

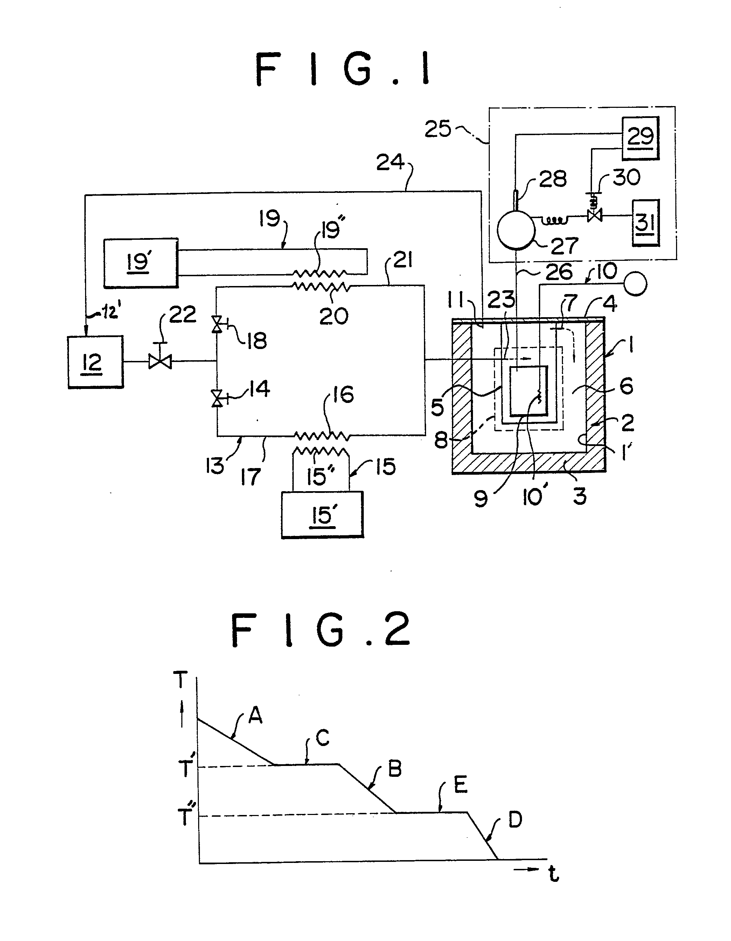

Referring now to the drawings, particularly to Figure 1, which shows a preferred embodiment of the apparatus for measuring the melting point and the boiling point of the solid and liquid phases of a gas, reference numeral 1 represents a heat insulating tank. A heat insulating part 3 formed of a vacuum layer and a heat insulating material and so forth forms the body 2 of the tank 1. Reference numeral 4 indicates a cover of the tank 1. An inner tank 5 is provided within the tank 1 so as to form a passage 6 between the inner tank 5 and the inner wall 1' of the tank 1 through which a gaseous heat medium can flow as will be hereinafter described in greater detail. A port 7 provided at the upper part of the tank 5 communicates between the interior of the tank 5 and the passage 6, and a radiation shield 8 is provided outside the inner tank 5.

A sample cell 9 is contained within the inner tank 5 and contains sample gas whose melting point and boiling point is to be measured, and a temperature measuring system 10 for measuring the temperature of the gas is attached to the sample cell 9, connecting wires of the system 10 extending out of the tank 5 and the tank 1.

The temperature measuring system 10 may employ a reference resistance thermometer in which a reference resistor 10' is internally mounted in the sample cell 9. Reference numeral 11 shows an output of the passage 6 provided in the cover 4.

Reference numeral 12 indicates a gas source such as helium or the like which is used as the heat medium. A piping system 13 is connected to the gas source and consists of a heating pipe route 17 having a heating flow rate control valve 14 manually or automatically controlled by a solenoid valve or the like and a heating heat exchanger 16 connected in series with the control valve 14 and heated by a heat source 15, and a cooling pipe route 21 having a cooling flow rate control valve 18 and a cooling heat exchanger 20 connected in series with the control valve 18 and cooled by a cooling source 19 connected in parallel with the heat exchanger 20.

The heat source 15 may employ a heater 15" connected to a power source 15', and the cooling source 19 may employ a refrigerator 19' and a cooling zigzag tube 19" connected to the refrigerator 19'. Reference numeral 22 illustrates a control valve such as a needle valve provided at the inlet side of the piping system 13. The outlet 23 of the piping system 13 is inserted through the tank 1, into the inner tank 5, and opens above the sample cell 9. In the example shown in Figure 1, the outlet 11 of the passage 6 is not opened externally but connected via a feedback conduit 24 to the gas source 12.

Further, reference numeral 25 depicts a pressure regulator connected to the sample cell 9, which regulator maintains the internal pressure of the sample cell 9 constant or controls the internal pressure as required. In this embodiment, a pressure regulating tank 27 is provided with a pressure sensor 28 and communicates through a capillary tube 26 with the sample cell 9. A gas flow rate control valve 30 is controlled by a pressure controller 29 to which the output of the pressure sensor 28 is applied. Thus, the gas flow rate from a gas source 31 containing pressure controlling gas to the pressure regulating tank 27 can be controlled.

The operation of the apparatus for measuring the melting point and the boiling point of a gas will be described.

When the sample gas in the sample cell 9 is in a gaseous phase, the control valve 22 and the cooling flow rate control valve 18 are opened and the opening of the control valve 18 is manually or automatically controlled. When the heat medium from the gas source 12 is exhausted in this manner, the heat medium passing through the cooling heat exchanger 20 of the cooling pipe route 21 is cooled via the cooling source 19, and the heat medium thus cooled is discharged from the outlet 23 of the piping system 13 into the inner tank 5.

Thus, the sample cell 9 contained within the inner tank 5 is cooled by the cooling heat medium thus exhausted to cool the sample gas, and the cooling heat medium thus cooled is circulated through the port 7, the passage 6, the outlet 11 and the feedback conduit 24 to the gas source 12 to be reused.

The gaseous phase sample gas is thus cooled, and the heat medium flow rate via the cooling flow rate control valve 18 can be thus controlled. When the sample gas is thus cooled as indicated in Figure 2, even if the heat medium is cooled to such low temperature that the gas transforms from a gaseous state A to a liquid state B, the sample gas maintains a constant temperature state C due to the latent heat. When the temperature of the sample gas of the state C is read by the temperature measuring system 10, the boiling point T' of the gas can be obtained.

When the sample gas temperature is cooled to the vicinity of the boiling point T', the heat medium flow rate via the cooling flow rate control valve 18 is gradually controlled so that the temperature change of 0.1°C per 10 to 20 minutes occurs, and the boiling point T' thus retained constantly can be precisely obtained and confirmed.

When the sample gas of the liquid phase B is further cooled under the control, constant temperature state E can be presented before it enters the solid state D, and the melting point T" can be similarly measured.

When the sample gas is solid state D or liquid state B, the cooling flow rate control valve 18 is closed and the heating flow rate control valve 14 is opened, and the sample gas can be heated to high temperature. Thus, the sample gas can be transformed vice versa, i.e., in reverse phase change to the previous status change, and the melting point and the boiling point of the gas can be thus measured.

It is preferred to use the same pressure controlling gas as the sample gas when the pressure regulator 25 is employed.

It should be understood from the foregoing description that since the inner tank 5 is provided via the passage 6 of the heat medium between the heat insulating tank 1 and the inner wall 1', the sample cell 9 having the temperature measuring system 10 of the sample gas charged therein is contained within the inner tank 5 and the heat medium is introduced from the outlet 23 of the piping system 13 into the inner tank 5 as was exemplified in the above embodiment, the temperature of the sample gas is not varied by the thermal effect of the external temperature, but can be precisely controlled to become a predetermined temperature. It should also be appreciated that since the piping system 13 connected to the gas source 12 of the heat medium consists of parallel heating pipe route 17 and the cooling pipe route 21, the heating pipe route 17 has the heating flow rate control valve 14 and the heating heat exchanger 16 heated by the heat source 15 connected in series with the control valve 14 and the cooling pipe route 21 has the cooling flow rate control valve 18 and the cooling heat exchanger 20 cooled by the cooling source 19 connected in series with the control valve 18, the sample gas can be raised or lowered at its temperature as desired by controlling the opening of the control valves 14, 18 with the fine adjustments of the temperature change of the gas and thus highly precise melting point and boiling point of the gas can be measured and yet the temperature of the sample gas can be raised or lowered in accordance with the phase state of the sample gas and with the request of measuring the melting point or the boiling point of the gas with rapid and simple operations. It should also be noted that since the melting point and the boiling point of the same sample gas is measured under the reversely lowering and raising temperature control after the measurements of the melting point and the boiling point of the gas, the reliability of the measured results can be ensured.

**Claims**

1. An apparatus for measuring the melting point and boiling point of a sample comprising:
   a heat insulating tank (1),
   an inner tank (5) provided within the heat insulating tank and having a port (7) communicating between the inner tank (5) and the heat insulating tank (1),
   a sample cell (9) containing the sample initially in the gaseous state provided within said inner tank (5), a sample temperature measuring system (10),
   and a piping system (13) having an inlet (12') and an outlet (23), said piping system providing a heating/cooling medium at said outlet and having parallel heating and cooling routes for said medium, the heating route (17) including a heating flow rate control valve (14) and a heating heat exchanger (16) heated by a heating source (15) and connected in series with said heating rate flow control valve (14) and the cooling route (21) including a cooling flow rate control valve (18) and a cooling heat exchanger (20) cooled by a cooling source (19) and connected in series with said cooling flow rate control valve (18), wherein the outlet (23) of said piping system opens within said inner tank (5), said heat insulating tank being provided with an output (11) which connects the heat insulating tank (1) with the inlet (12') of the piping system (13) through a feedback conduit (24) so that the medium can circulate from the piping system through the inner tank (5), the port (7), the space (6) included between the outer wall of said inner tank (5) and the main wall (1') of the heat insulating tank (1), and back to the piping system (13).
2. Apparatus according to claim 1, wherein a pressure regulator (25) is attached to said sample cell (9) for adjusting the pressure of the sample gas within the sample cell.
3. Apparatus according to claim 1 or 2, wherein said heating source (15) includes a heater (15") connected to a power source (15'), and said cooling source (19), includes a refrigerator (19') and a cooling tube connected to the refrigerator.
4. Apparatus according to claim 1, 2 or 3, wherein a needle control valve (22) is provided at the inlet side of said piping system, before the parallel heating (17) and cooling (21) routes.
5. Apparatus according to claim 2 or to claim 3 or 4 when appended to claim 2, wherein the pressure regulator (25) includes a pressure regulating tank (27) provided with a pressure sensor (28), said pressure regulating tank being filled with a pressure controlling gas and communicating through a capillary tube (26) with said sample cell (9), and a control valve (30) for controlling the flow rate of the pressure controlling gas to the pressure regulating tank (27) controlled by a pressure controller (29) to which the output signal of said pressure sensor (28) is applied.

**Patentansprüche**

1. Einrichtung zum Messen des Schmelzpunktes und des Siedepunktes einer Probe, enthaltend:
   einen wärmeisolierenden Tank (1),
   einen inneren Tank (5), der in dem wärmeisolierenden Tank angeordnet ist und einen Kanal (7) aufweist, der den inneren Tank (5) und den wärmeisolierenden Tank (1) miteinander verbindet,
   eine Probenzelle (9), die die Probe anfänglich im gasförmigen Zustand und ein Probentemperaturmeßsystem (10) enthält und in dem inneren Tank (5) angeordnet ist,
   und ein Rohrleitungssystem (13) mit einem Einlaß (12') und einem Auslaß (23), wobei das Rohrleitungssystem ein Erwärmungs/Kühlungsmedium an dem genannten Auslaß bereitstellt und parallele Erwärmungs- und Kühlungskreisläufe für das Medium aufweist, der Erwärmungskreislauf (17) ein Erwärmungsströmungsratensteuerventil (14) und einen Erwärmungswärmetauscher (16) aufweist, der durch eine Wärmequelle (15) erwärmt wird und in Serie mit dem Erwärmungsratenströmungssteuerventil (14) geschaltet ist und der Kühlkreislauf (21) ein Kühlströmungsratensteuerventil (18) und einen Kühlwärmetauscher (20) umfaßt, der durch eine Kühlquelle (19) gekühlt ist und in Serie mit dem Kühlströmungsratensteuerventil (18) geschaltet ist, wobei der Auslaß (23) des Rohrleitungssystems sich in den inneren Tank (5) öffnet, der wärmeisolierende Tank mit einem Ausgang (11) versehen ist, der den wärmeisolierenden Tank (1) mit dem Einlaß (12') des Rohrleitungssystems (13) über eine Rückführleitung (24) verbindet, so daß das Medium von dem Rohrleitungssystem durch den inneren Tank (5), den Kanal (7), den zwischen der Außenwand des inneren Tanks und der Hauptwand (1') des wärmeisolierenden Tanks (1) eingeschlossenen Zwischenraum (8) und zurück zu dem Rohrleitungssystem (13) zirkulieren kann.

2. Einrichtung nach Anspruch 1, bei der ein Druckregler (25) mit der Probenzelle (9) verbunden ist, um den Druck des Probengases innerhalb der Probenzelle einzustellen.

3. Einrichtung nach Anspruch 1 oder 2, bei der die Wärmequelle (15) einen Heizer (15") enthält, der mit einer Stromquelle (15') verbunden ist, und die Kühlquelle (19) einen Kühler (19') und ein Kühlrohr enthält, das mit dem Kühler verbunden ist.

4. Einrichtung nach Anspruch 1, 2 oder 3, bei der ein Nadelsteuerventil (22) auf der Einlaßseite des Rohrleitungssystems vor den parallelen Wärme- und Kühlkreisläufen (17, 21) angeordnet ist.

5. Einrichtung nach Anspruch 2 oder nach Anspruch 3 oder 4, wenn abhängig von Anspruch 2, bei der der Druckregler (25) einen Druckregeltank (27) enthält, der mit einem Drucksensor (28) versehen ist, wobei der Druckregeltank mit einem druckregelnden Gas gefüllt und über ein Kapillarrohr (26) mit der Probenzelle (9) verbunden ist und ein Steuerventil (30) zum Steuern der Strömungsrate des druckregelnden Gases zu dem Druckregeltank (27) durch einen Druckregler (29), dem das Ausgangssignal des Drucksensors (28) zugeführt ist, vorgesehen ist.

**Revendications**

1. Appareil permettant de mesurer le point de liquéfaction et le point d'ébullition d'un échantillon comprenant:
— une cuve (1) d'isolation thermique,
— une cuve interne (5) placée à l'intérieur de la cuve d'isolation thermique et possédant un orifice (7) faisant communiquer la cuve interne (5) et la cuve d'isolation thermique (1),
— une cellule (9) d'échantillon contenant l'échantillon initialement dans l'état gazeux et placée à l'intérieur de ladite cuve interne (5),
— un système (10) de mesure de la température de l'échantillon,
— et un système de tuyauterie (13) possédant une entrée (12') et une sortie (23), ledit système de tuyauterie fournissant un moyen de chauffage et, ou bien, de refroidissement au niveau de ladite sortie et possédant des chemins parallèles de chauffage et de refroidissement pour ledit moyen, le chemin de chauffage (17) comportant une soupape de commande de débit (14) de chauffage et un échangeur thermique (16) de chauffage chauffé par une source de chauffage (15) et connecté en série avec ladite soupape de commande de débit (14) de chauffage, et le chemin de refroidissement (21) comportant une soupape de commande de débit (18) de refroidissement et un échangeur thermique (20) de refroidissement refroidi par une source de refroidissement (19) et connecté en série avec ladite soupape de commande de débit (18) de refroidissement, où la sortie (23) dudit système de tuyauterie débouche à l'intérieur de ladite cuve interne (5), ladite cuve d'isolation thermique étant dotée d'une sortie (11) qui raccorde la cuve d'isolation thermique (1) avec l'entrée (12') du système de tuyauterie (13) via une conduite de réaction (24) si bien que le moyen peut circuler, depuis le système de tuyauterie, dans la cuve interne (5), l'orifice (7), l'espace (6) existant entre la paroi externe de ladite cuve interne (5) et la paroi principale (1') de la cuve d'isolation thermique (1), pour revenir au système de tuyauterie (13).

2. Appareil selon la revendication 1, où un régulateur de pression (25) est fixé à ladite cellule (9) d'échantillon afin d'ajuster la pression du gaz échantillon à l'intérieur de la cellule d'échantillon.

3. Appareil selon la revendication 1 ou 2, où ladite source de chauffage (15) comporte un élément chauffant (15") connecté à une source d'énergie (15'), et ladite source de refroidissement (19) comporte un réfrigérateur (19') et un tube de refroidissement connecté au réfrigérateur.

4. Appareil selon la revendication 1, 2 ou 3, où une soupape (22) à commande par pointeau est placée du côté entrée dudit système de canalisation, avant les chemins parallèles de chauffage (17) et de refroidissement (21).

5. Appareil selon la revendication 2 ou la revendication 3 ou 4 dépendant de la revendication 2, où le régulateur de pression (25) comporte une cuve (27) de régulation de pression dotée d'un capteur de pression (28), ladite cuve de régulation de pression étant remplie d'un gaz de commande de pression et communiquant via un tube capillaire (26) avec ladite cellule d'échantillon (9), et d'une soupape de commande (30) servant à commander le débit du gaz de commande de pression arrivant à la cuve de régulation de pression (27) commandée par un dispositif de commande de pression (29) auquel le signal de sortie dudit capteur de pression (18) est appliqué.

# F I G . 1

# F I G . 2

1